(19) Europäisches Patentamt / European Patent Office / Office européen des brevets

(11) **EP 1 792 389 B1**

(12) **EUROPEAN PATENT SPECIFICATION**

(45) Date of publication and mention
of the grant of the patent:
**08.07.2009 Bulletin 2009/28**

(51) Int Cl.:
*H02M 7/537* (2006.01)    *G05F 3/06* (2006.01)

(21) Application number: **05778888.7**

(86) International application number:
**PCT/IT2005/000477**

(22) Date of filing: **04.08.2005**

(87) International publication number:
**WO 2006/030466 (23.03.2006 Gazette 2006/12)**

(54) **CIRCUIT FOR THE SINUSOIDAL REGULATION OF THE ELECTRICAL POWER SUPPLIED TO A LOAD**

SCHALTUNG ZUR SINUSFÖRMIGEN REGELUNG DER EINER LAST ZUGEFÜHRTEN ELEKTRISCHEN LEISTUNG

CIRCUIT POUR LA REGULATION SINUSOIDALE DE L'ENERGIE ELECTRIQUE FOURNIE A UNE CHARGE

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.09.2004 IT RM20040441**

(43) Date of publication of application:
**06.06.2007 Bulletin 2007/23**

(73) Proprietor: **Micronasa di Patarchi Alberto**
**00122 Ostia Lido (RM) (IT)**

(72) Inventor: **PATARCHI, Alberto**
**I-00122 Ostia Lido (IT)**

(74) Representative: **Baroni, Matteo**
**Bugnion S.p.A.**
**Viale Lancetti, 17**
**20158 Milano (IT)**

(56) References cited:
**GB-A- 1 202 863        GB-A- 1 251 748**

• **PATENT ABSTRACTS OF JAPAN vol. 1998, no. 06, 30 April 1998 (1998-04-30) & JP 10 042576 A (MATSUSHITA ELECTRIC WORKS LTD), 13 February 1998 (1998-02-13)**

## Description

<u>Technical Field</u>

The present invention relates to a circuit for the sinusoidal regulation of the electrical power supplied to a load.

<u>Background Art</u>

As is well known, there are several types of regulation and control of the power supplied to resistive and inductive loads powered with alternating voltage.

For example, both for lighting systems, and for electric motors, according to a first technique, through an appropriate commutator, the half-waves of the power current flow are throttled, thereby selecting the fraction of the total power that is allowed to reach the load.

In other words, by controlling the conduction angle of the commutator it is possible to let only a part of power supply sinusoidal wave, thereby obtaining the desired power.

The selection of capacitors through commutators for generating sinusoidal waveforms is proposed in document GB 1202863.

However, the regulating system briefly described above has a significant drawback, due to the generation of harmonics, especially of the third order, which cause considerable interference.

Therefore, another technique has been devised, used for example for electric motors, which provides for the application of a high frequency (e.g. 20 kHz) switching signal to mains voltage; regulating the duty cycle of the portions of half wave thereby obtained, i.e. regulating the width of the switching impulses, the flow of current in the load and hence the speed of the motor is correspondingly controlled.

Although this second type of control generates less harmonic interference than the one described above, it is nonetheless not free of operative drawbacks; at least one filter is required to eliminate the switching frequency and, more in general, anti-interference filters are necessary to ensure that the regulating devices thus obtained comply with current standards.

Moreover, switching systems are characterised by undesired vibrations, which cause particularly annoying noises and resonance; these vibrations are due to the so-called "torque ripples", caused by the sudden variations in the current supplied to the load.

<u>Disclosure of Invention</u>

An object of the invention is to make available a circuit that does not cause any conducted or irradiated electromagnetic emissions due to the regulation of the sinusoidal power.

Another object of the invention is to provide a circuit able to operate correctly without generating mechanical vibrations due to the sudden variations in the current supplied to the load.

A further object of the invention is to make available a circuit that minimises heat dissipation by the Joule effect.

These and other objects are substantially achieved by a circuit for the sinusoidal regulation of the electrical power supplied to a load as described in the accompanying drawings. The objects are solved by the features of claim 1. The dependent claims recite advantageous embodiments of the invention.

<u>Description of the Drawings</u>

Further characteristics and advantages shall become more readily apparent from the detailed description of a preferred and not limiting embodiment of the circuit according to the present invention.

Said description is provided with reference to the accompanying figures, also having purely exemplifying and thus not limiting purpose, in which:

- Figure 1 shows a schematic diagram of a first embodiment of the circuit according to the invention;
- Figure 2 shows a schematic diagram of a second embodiment of the circuit according to the invention;
- Figure 3 shows a schematic diagram of a driving circuit for the circuit of Figure 1 or the circuit of Figure 2;
- Figure 4 shows a table providing operating parameters for the circuit of Figure 1 or 2 and the related driving circuit.

<u>Description of the Illustrative Embodiments</u>

With reference to the accompanying drawings, the number 1 globally designates the circuit for the discrete regulation of the electrical power supplied to a load according to the invention.

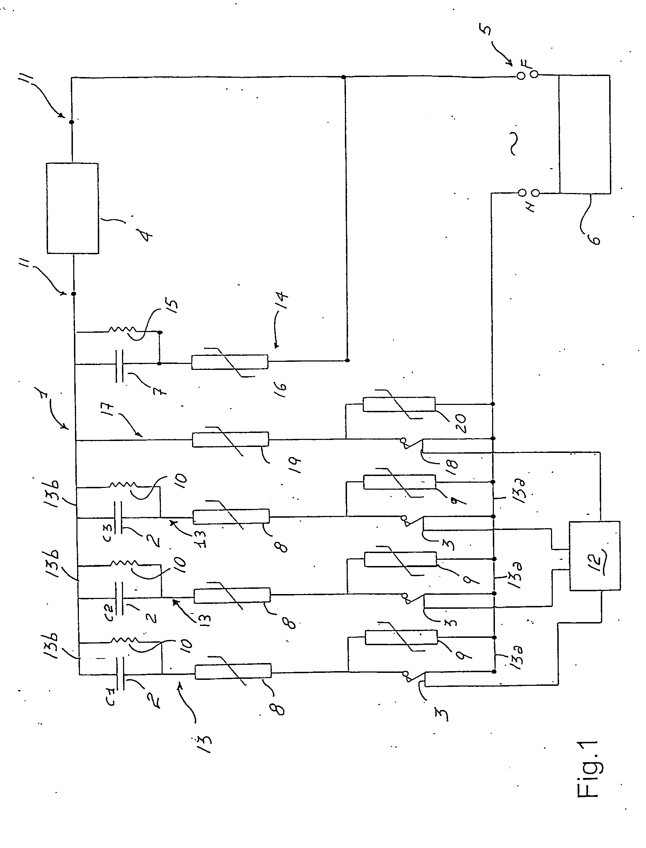

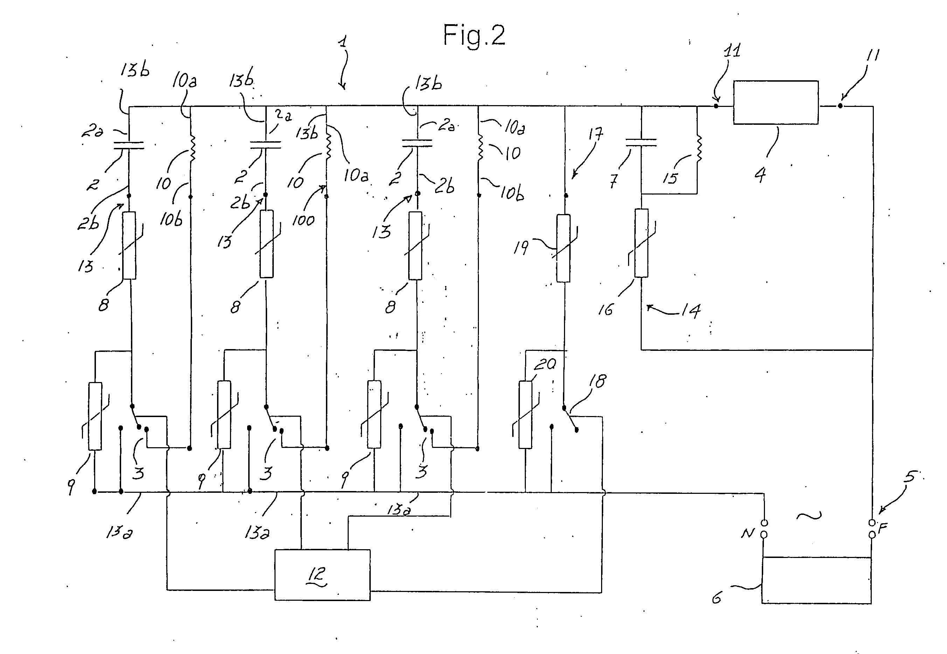

The circuit 1 (Figures 1 and 2) comprises first of all an input interface 5, for connection to a unit or grid alternating power supply 6, and an output interface 11, for connection with a load 4.

The power supply unit 6, which can be constituted by a power supply grid or by any apparatus able to supply or generate electrical energy, makes a predetermined voltage available; purely by way of example, an electrical grid with alternating voltage (e.g. 220V) is considered herein, which is connected to the circuit 1 through the Neutral (N) and Phase (F) terminals.

In practice, the interface 5 can be constituted by any connecting means between the circuit 1 and the aforesaid power supply unit 6.

The output interface 11 instead defines the means used for the connection between the circuit 1 and the load 4; as shall become more readily apparent hereafter, through the output interface 11 the load is supplied with an electrical power that is appropriately regulated according to the requirements and characteristics of the load 4.

The circuit 1 further comprises a plurality of main branches 13, connected in parallel with each other; more in particular, each main branch 13 has a first end 13a connected to the power supply unit 6, and a second end 13b connected to the load 4.

One or more of the main branches 13 comprises a capacitive element 2 and a respective commutator 3 associated thereto; the commutator 3 can be driven between a first operative condition, in which it closes a connection between the power supply unit 6, the capacitive element 2 and the load 4, and a second operative condition, in which it does not close the aforesaid connection.

In practice, each commutator 3, according to its present operative condition, can insert the capacitive element 2 between the power supply unit 6 and the load 4; driving different commutators 3 between the first and the second operative condition it is thus possible to insert different capacitive elements 2, connected to each other in parallel, between the power supply unit 6 and the load 4.

Consequently, the capacitive reactance of the impedance interposed between the power supply unit 6 and the load 4 can be varied, thereby determining the fraction of power that is to reach the load 4.

More in particular, the more the number of commutators 3 in the first operative condition increases, the more the number of capacitive elements 2 interposed between the grid 6 and the load 4 increases; each capacitive element 2 defines a conductive path between the power supply and the load 4, and it is therefore possible to increase the power transferred to the load 4.

Advantageously, the capacitive elements 2 are embodied as conventional capacitors, having predetermined capacity, in order precisely to regulate the quantity of power supplied to the load 4 as indicated above.

Delving in greater detail, suppose having available two capacitive elements 2, respectively of $1\mu$f and $2\mu$f; inserting only the first one (hence, the commutator associated thereto is in the first operative condition, whereas the commutator associated to the second capacitive element is in the second operative condition), a total capacity of $1\mu$f is in fact obtained, and a corresponding power will reach the load 4.

Inserting only the second capacitive element (i.e. bringing the first commutator to the second operative condition, and the second commutator to the first operative condition), obviously a total capacity of $2\mu$f is obtained, and a greater power will be supplied to the load 4.

Lastly, inserting both aforesaid capacitive elements 2 (i.e. both the first and the second commutator 3 are in the first operative condition, so that the two capacitors 2 are mutually connected in parallel), a total capacity of $3\mu$f is obtained, further increasing the power fraction supplied to the load 4.

In light of the above, it is readily apparent that the various capacitive elements 2 are need not necessarily be inserted in mutually exclusive fashion, but can also be connected simultaneously, in order to obtain predetermined values of total capacitive reactance.

Obviously, there can be any number of main branches 13, according to the number of levels of desired capacitive reactance.

The capacitive element 2 of each main branch 13 is also associated to a respective discharge device 10, whose purpose is to discharge the energy accumulated in the corresponding capacitive element 2; said discharge takes place, as shall become readily apparent hereafter, when the capacitive element 2 is not connected between the load 4 and the power supply unit 6.

Advantageously, the discharge devices 10 can be constituted by resistors; for example, 1W resistors with a resistance of 220K$\Omega$ can be chosen.

Each main branch 13 can further comprise first current regulating means 8, associated to the capacitive element 2; said first current regulating means 8 serve the purpose of regulating the charge of the capacitors and of eliminating current peaks inside the main branch 13 in which they are located.

The current regulating means 8 are advantageously constructed as thermistors of the NTC type (Negative Temperature Coefficient), whose resistance is greater (e.g. 60$\Omega$) during the transient of the commutator 3 associated to the capacitive element 2 of the main branch 13 in question, whilst at steady state their resistance is nearly negligible (less than 1$\Omega$).

The main branches 13 can also have protective means 9, associated to the commutator 3 present in each branch 13; the protective means 9 short-circuit the commutator 3 associated thereto on the occasion of extra voltages or extra currents due to switching transients.

Preferably, the protective means 9 are embodied by conventional varistors, connected in parallel to the commutators 3.

The circuit 1 further comprises an additional branch 17 which, apart from the absence of the capacitive element 2, has a wholly similar structure to the aforesaid main branches 13.

The additional branch 17 is provided with a commutator 18, which can be driven between a first operative condition, in which it closes a connection between the power supply unit 6 and the load 4, and a second operative condition, in which it does not close said connection.

The additional branch 17 further comprises current regulating means 19, to eliminate current peaks in the additional branch 17, as well as protective means 20, preferably connected in parallel to the commutator 18, to protect the commutator 18 from extra currents and extra voltages due to switching transients.

Similarly to what is described above for the main branches 13, the current regulating means 19 of the additional branch 17 can be embodied by means of an NTC thermistor, whilst the protective means 20 of the additional branch 17 can be obtained by means of a varistor or equivalent circuit element.

The commutators 3 of the main branches 13 and the commutator 18 of the additional branch 17 can be either of the mechanical type (e.g. with simple switches, push-buttons, sliding or rotary switches), or electromechanical (e.g., relays), or electronic (e.g., triac).

Also provided is an auxiliary branch 14, connected in parallel to the load to control any circuit resonance induced by the load 4; the auxiliary branch 14 comprises a capacitive element 7, a discharge device 15, preferably connected in parallel to the capacitive element 7, and current regulating means 16, to eliminate current peaks due to the short circuit exhibited by the capacitor 7 when any commutator 3 is turned on.

The current regulating means 16, in the preferred embodiments, are connected in series to the capacitor 7 and discharge device 15, and are constituted by an NTC thermistor; the discharge device 15 is advantageously a resistor.

In order to drive the commutators 3, 18 between the first and the second operative condition, the circuit 1 comprises a control block 12, connected to each of said commutators 3, 18; it should be noted that, if the commutator 18 of the additional branch 17 is in the first operative condition, all the commutators 13 are driven to the second operative condition, since through the additional branch 17 the load is directly connected to the power supply and it receives all available power.

Vice versa, if power has to be reduced by a predetermined factor, the commutator 18 of the additional branch 18 is brought to the second operative condition, whilst one or more of the commutators 3 of the main branches 13 are brought to the first operative condition.

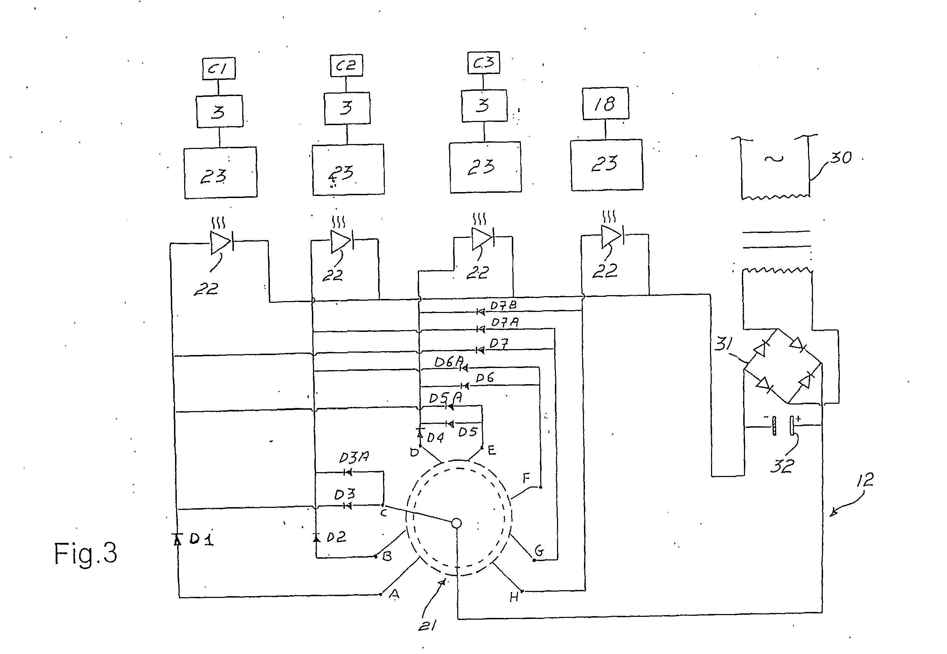

The control block 12 can be embodied in various manners; e.g., it can be constituted by a rotary commutator 21 (Figure 3) which, at each of the angular positions assumed A, B, C, D, E, F, G, H causes the insertion of one or more capacitive elements 2 between the power supply 6 and the load 4.

More in particular, in the position "A" only the capacitor C1 is inserted, by means of the diode D1; in the position "B", only the capacitor C2 is inserted, by means of the diode D2.

In the angular position "C", both capacitors C1 and C2 are connected to the load 4 (and in parallel with each other) through the diodes D3 and D3A; in the position "D" the diode D4 causes the insertion of the capacitor C3 only.

In the position "E" the diodes D5 and D5A cause the insertion of the capacitors C1 and C3; in the position "F" the diodes D6 and D6A cause the insertion of the capacitors C2 and C3.

In the position "G" the diodes D7, D7A and D7B insert all three capacitors C1, C2 and C3; lastly, at the angular position "H" only the additional branch 17 is used, for a direct connection between the power supply 6 and the load 4.

If the rotary commutator 21 is combined with a microprocessor, to each binary output combination provided thereby corresponds an angular position of the commutator 21; in this way, it is possible to associate each binary signal to a particular value of the capacitive reactance interposed between the load 4 and the power supply unit 6.

Preferably, as shown in Figure 3, the control block 12 is connected to the power supply mains through a transformer 30, a diode bridge 31 and a capacitor 32.

It should be noted that, advantageously, the control block 12 is operatively active on the main branches 13 and on the additional branch 17 (and in particular on the commutators 3, 18), although it is galvanically separated therefrom; each of the commutators 3, 18 can be commanded by photo-coupling between an emitter 22, commanded by the control block 12, and a photodetector 23, associated to a corresponding commutator 3, 18.

Additionally or alternatively, the circuit 1 can comprise a microprocessor, able to receive as an input a setting signal entered by an operator, and to generate as an output an appropriate regulating signal, to command the correct driving of the various commutators 3, 18.

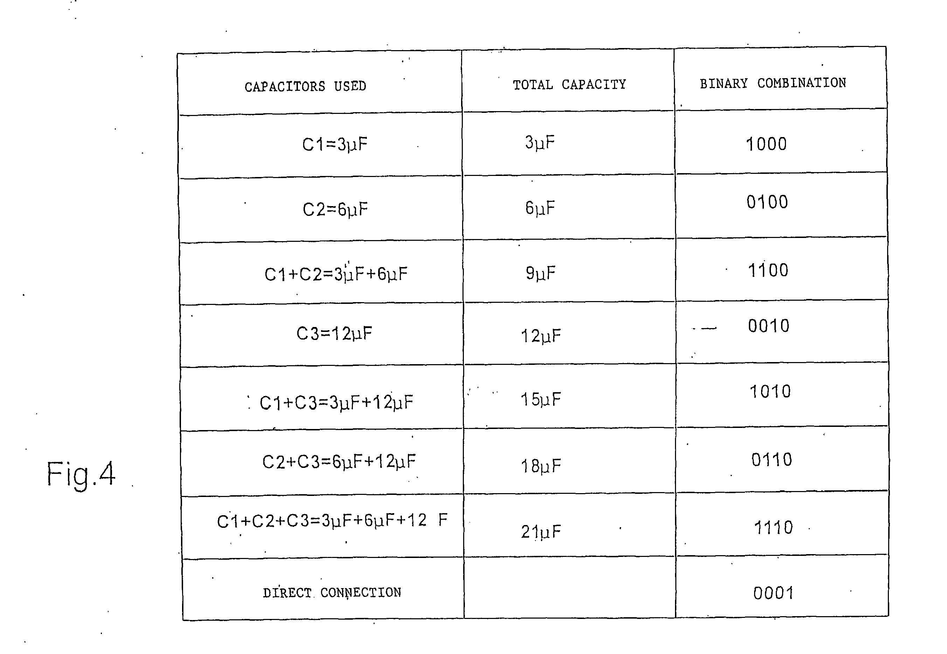

In this regard, Figure 4 shows a table in which each binary value generated as an output by the microprocessor is associated to a corresponding combination of capacitors connected upstream of the load 4; as can be noted, the capacitors C1, C2, C3 can be introduced gradually, in such a way as to supply 4 different power levels to the load, according to the value of the defined capacitive reactance.

The maximum power level corresponds to the binary combination "0001" (position "H" of the rotary commutator 21), in which all available power is transferred from the main 6 to the load 4 through the additional branch 17; vice versa, the minimum level of power corresponds to the binary combination "1000" (position "A") of the rotary commutator 21), in which only the capacitor with minimal capacity is inserted.

In the specific example of Figure 4, the values selected for the capacitors are as follows:

$$C1 = 3\mu F$$

$$C2 = 6\mu F$$

$$C3 = 12\mu F$$

In this way, appropriately combining the three capacitors, it is possible to obtain total capacities of $3\mu F$, $6\mu F$, $9\mu F$, $12\mu F$, $15\mu F$, $18\mu F$ and $21\mu F$; the eighth possibility is provided by the additional branch 17, which allows to connect the load 4 to the power supply 6 without introducing any capacitive element.

In general, in order to best exploit - i.e. in the most uniform possible manner - the available range of capacities, the capacity values of the employed capacitive elements 2 can be chosen in such a way that the capacities are ordered in growing succession, and each one is twice as large as the immediately smaller capacity.

Moreover, it is clear that the total number of possible combination is $2^N$, in which N is the number of connectable capacitors (in the example of Figure 4, N is equal to 3); to each combination corresponds a respective level of power which can be supplied to the load 4.

Thus, the power supplied to the load 4 is regulated discretely in this way.

Figures 1 and 2 show two different embodiments of the circuit according to the invention.

Figure 1, in particular, shows that the discharge devices 10 and 15 are connected in parallel to the respective capacitive elements 2 and 7; in this case, the commutators 3 (and preferably also the commutator 18 of the additional branch 17) are on/off switches, which are closed in their first operative condition, and are opened in the second operative condition.

In Figure 2, the commutators 3 in their first operative condition insert the respective capacitive element 2 between the power supply 6 and the load 4, whilst in the second operative condition they connect the capacitive element 2 to the corresponding discharge device 10.

More in detail, each capacitive element 2 has a first and a second end 2a, 2b; each discharge device 10 similarly has a first and a second end 10a, 10b.

The first end 2a of each capacitive element 2 is connected to the first end 10a of the respective discharge device 10, and both are connected to the load 4.

When the corresponding commutator 3 is in the first operative condition, it connects the second end 2a of the capacitive element 2 with the power supply unit 6, leaving open the branch in which the discharge device 10 is located; in the second operative condition, the commutator 3 connects the second end 2b of the capacitive element 2 and the second end 10b of the discharge device 10, thereby excluding the capacitive element 2 from the connection between the power supply 6 and the load 4 and allowing the discharging of the capacitive element 2.

The operation of the commutator 18 of the additional branch 17 remains substantially unchanged with respect to the embodiment of Figure 1: in the first operative condition, the commutator 18 defines a connection between the power supply unit 6 and the load 4, whilst in the second operative condition it leaves open the additional branch 17, so that one or more of the capacitive elements 2 can be interposed between the power supply 6 and the load 4.

Note that "mixed" circuit configurations can also be obtained, in which one or more commutators 3 are of the type described with reference to Figure 1, and one or more commutators 3 are of the type described with reference to Figure 2.

Regardless of the specific embodiment considered, in light of the above it is clear that the capacitive elements 2 have a similar behaviour to simple drop resistors, but with the advantage of not exhibiting substantial heat dissipation due to the Joule effect.

Hence, introducing capacitors with predetermined capacity, it is possible to control current flows from the power supply 6 to the load 4, correspondingly regulating the power delivered to the load 4.

In practice, thanks to the circuit configurations described above, the presence is simulated of a variable sinusoidal generator connected upstream of the load 4, able to output a perfectly sinusoidal ideal voltage.

The invention achieves important advantages.

First of all, the regulation performed through the circuit is distinguished by the absence of harmonics, in particular third order harmonics, as well as by the absence of conducted or irradiated electromagnetic emissions due to the regulation itself.

Moreover, mechanical vibrations due to the sudden variations of the power supply current, typical of regulating devices according to the prior art, are completely eliminated.

Another advantage emerges considering that the circuit according to the present invention does not need complicated and costly grid filters.

In addition to the above, thanks to the "step" regulation performed as described above, it is possible to define with precision and reliability the power that is delivered to the load.

Use of capacitive elements has the further advantage of not causing energy dissipation in the form of heat by Joule effect.

Another advantage emerges considering the galvanic isolation between the driving circuit and the power circuit, which allows to obtain a substantially uncoupling between the two circuit portions.

In addition, the circuit according to the invention, having a simple structure and being obtained with a low number of components, is economical and extremely reliable.

**Claims**

1.  A circuit for the sinusoidal regulation of the electrical power supplied to a load, comprising:

    - an input interface (5) to receive an electrical power supply from a power supply unit (6);
    - an output interface (11) to supply a predetermined electrical power to a load (4);
    - a plurality of main branches (13) connected to each other in parallel, each main branch (13) being provided with:

        - a respective capacitive element (2);
        - a respective current regulator (8) for regulating the current in said respective capacitive element (2);
        - a respective commutator (3), associated to said capacitive element (2) and able to be driven between a first operative condition in which it closes a connection between said load (4), said respective capacitive element (2) and said power supply unit (6), and a second operative condition in which it does not close said connection, each capacitive element (2) defining a conductive path between the power supply unit (6) and the load (4) when the respective commutator (3) is in its first operative condition;

**characterised in that** it comprises

- a control block (12) to drive said commutators (3) between their first and second operative condition for inserting different capacitive elements (2), connected to each other in parallel, between the power supply unit (6) and the load (4), and to regulate the power supplied to said load (4), defining the capacitive reactance interposed between said power supply unit (6) and said load (4);
- an auxiliary branch (14) for controlling resonance at said load (4).

2. Circuit as claimed in claim 1, **characterised in that** each of said main branches (13) has a first end (13a) connected to said power supply unit (5), and a second end (13b) connected to said load (4).

3. Circuit as claimed in claim 1 or 2, **characterised in that** one or more of said main branches (13) further comprises current regulating means (8) associated to the capacitive element (2) of said main branch (13), said current regulating means (8) being adapted to control the current in said main branch (13).

4. Circuit as claimed in any one of the claims 1 through 3, **characterised in that** one or more of said main branches (13) further comprises second protective means (9) associated to the commutator (3) of said main branch (13) to protect said commutator (3) against extra voltages and/or extra currents, in particular when switching between the first and the second operative condition.

5. Circuit as claimed in any one of the claims 1 through 4, **characterised in that** one or more of said main branches (13) is further provided with a discharge device (10), associated to the capacitive element (2) of said main branch (13), to discharge the energy accumulated in said capacitive element (2).

6. Circuit as claimed in any one of the previous claims, **characterised in that** it further comprises an auxiliary branch (14) connected in parallel to said load (4) and provided with:

- a capacitive element (7);
- a current regulating element (16);
- a discharge device (15) connected in parallel to said capacitive device (7) to discharge energy accumulated in said capacitive element (7).

7. Circuit as claimed in any of the previous claims, **characterised in that** the commutator (3) of one or more of said main branches (13) can be driven between a closed condition, corresponding to said first operative condition, and an open condition, corresponding to said second operative condition.

8. Circuit as claimed in claim 7, **characterised in that** the capacitive element (2) of one or more of said main branches (13) is connected in parallel to the respective discharge device (10).

9. Circuit as claimed in any one of the previous claims, **characterised in that** the discharge device (10) of one or more of said main branches (13) has a first end (10a), connected to an end (2a) of the respective capacitive element (2), and a second end (10b), the commutator (3) of said one or more main branches (13), when it is in the second operative condition, closing a connection between the second end (10b) of said discharge device (10) and a second end (2b) of said respective capacitive element (2).

10. Circuit as claimed in any of the previous claims, **characterised in that** it further comprises an additional branch (17) provided at least with one commutator (18), able to be driven between a first operative condition in which it closes a connection between said power supply unit (6) and said load (4), and a second operative condition in which it does not close said connection.

11. Circuit as claimed in claim 10, **characterised in that** said additional branch (17) further comprises current regulating means (19) adapted gradually to regulate the current and to eliminate current peaks in said additional branch (17).

12. Circuit as claimed in claim 10 or 11, **characterised in that** said additional branch (17) further comprises protective means (20) associated to said commutator (18) to protect the commutator from extra voltage and/or extra currents, in particular when switching between the first and the second operative condition.

**Patentansprüche**

1. Schaltung zur sinusförmigen Regelung der einer Last zugeführten elektrischen Leistung, umfassend:

- eine Eingangsschnittstelle (5) zum Empfang einer elektrischen Speisung von einer Speiseeinheit (6);
- eine Ausgangsschnittstelle (11), um einer Last (4) eine vorgegebene elektrische Leistung zu liefern;
- eine Vielzahl von Hauptästen (13), die miteinander parallel geschaltet sind, wobei jeder Hauptast (13) versehen ist mit:

    • einem entsprechenden kapazitiven Glied (2);
    • einem entsprechenden Glied zur Regulierung des Stroms im kapazitiven Glied (2);
    • einem entsprechenden Schalter (3), der dem kapazitiven Glied (2) zugeordnet und imstande ist, zwischen einer ersten Arbeitsstellung, in der er die Verbindung zwischen der Last (4), dem entsprechenden kapazitiven Glied (2) und der Speiseeinheit (6) schließt, und einer zweiten Arbeitsstellung ansteuerbar ist, in der er nicht diese Verbindung schließt, wobei jedes kapazitive Glied (2) einen Leiterpfad zwischen der Speiseeinheit (6) und der Last (4) festlegt, wenn sich der entsprechende Schalter (3) in der ersten Arbeitsstellung befindet;

**dadurch gekennzeichnet, dass** sie umfasst:

    - einen Kontrollblock (12) zur Ansteuerung der Schalter (3) zwischen der ersten und der zweiten Arbeitsstellung, um die verschiedenen mit-einander parallel geschalteten kapazitiven Glie-der (2) zwischen der Speiseeinheit (6) und der Last (4) einzuschalten und die der Last (4) zugeführten Leistung zu regeln, wobei der kapazitive, zwischen der Speiseeinheit (6) und der Last (4) geschaltete kapazitive Blindwiderstand festgelegt wird;
    - einen Hilfsast (14) zur Kontrolle von Resonanzen im Bereich der Last (4).

2. Schaltung nach Anspruch 1, **dadurch gekennzeichnet, dass** jeder der Hauptäste (13) ein erstes, mit der Speiseeinheit (6) verbundenes Ende (13a) und ein zweites, mit der Last (4) verbundenes Ende (13b) aufweist.

3. Schaltung nach Anspruch 1 oder 2, **dadurch gekennzeichnet, dass** ein oder mehrere Hauptäste (13) überdies Stromregelmittel (8) umfassen, die dem kapazitiven Glied (2) des Hauptastes (13) zugeordnet sind, wobei das Stromregelmittel (8) bereitgestellt ist, den Strom im Hauptast (13) zu überwachen.

4. Schaltung nach einem beliebigen der Ansprüche von 1 bis 3, **dadurch gekennzeichnet, dass** ein oder mehrere Hauptäste (13) überdies zweite Schutzmittel (9) umfassen, die dem Schalter (3) des Hauptastes (13) zugeordnet sind, um den Schalter (3) vor Extraspannungen und/oder Extraströmen zu schützen, insbesondere im Bereich von Umschaltungen zwischen der ersten und der zweiten Arbeitsstellung.

5. Schaltung nach einem beliebigen der Ansprüche von 1 bis 4, **dadurch gekennzeichnet, dass** ein oder mehrere Hauptäste (13) überdies mit einer Entladevorrichtung (10) versehen ist, die dem kapazitiven Glied (2) des Hauptastes (13) zugeordnet ist, um die im kapazitiven Glied (2) gesammelte Energie zu entladen.

6. Schaltung nach einem beliebigen der vorstehenden Ansprüche, **dadurch gekennzeichnet, dass** sie überdies einen mit der Last (4) parallel geschalteten Hilfsast (14) umfasst und versehen ist mit:

    - einem kapazitiven Glied (7);
    - einem Stromregelglied (16);
    - einer Entladevorrichtung (15), die mit dem kapazitiven Glied (7) parallel geschaltet ist, um die im kapazitiven Glied (7) gesammelte Energie zu entladen.

7. Schaltung nach einem beliebigen der vorstehenden Ansprüche, **dadurch gekennzeichnet, dass** der Schalter (3) eines oder mehrerer Hauptäste (13) zwischen einer der ersten Arbeitsstellung entsprechenden Schließstellung und einer der zweiten Arbeitsstellung entsprechenden Offenstellung ansteuerbar ist.

8. Schaltung nach Anspruch 7, **dadurch gekennzeichnet, dass** das kapazitive Glied (2) eines oder mehrerer Hauptäste (13) mit der entsprechenden Entladungsvorrichtung (10) parallel geschaltet sind.

9. Schaltung nach einem beliebigen der vorstehenden Ansprüche, **dadurch gekennzeichnet, dass** die Entladevorrichtung (10) eines oder mehrerer Hauptäste (13) ein erstes, mit dem Ende (2a) des entsprechenden kapazitiven Gliedes (2) verbundenes Ende (10a) und ein zweites Ende (10b) aufweisen, wobei der Schalter (3) eines oder mehrerer Hauptäste (13), wenn er sich in der zweiten Arbeitsstellung befindet, die Verbindung zwischen dem ersten Ende (10b) der Entladevorrichtung (10) und einen zweiten Ende (2b) des entsprechenden kapazitiven Gliedes (2) schließt.

10. Schaltung nach einem beliebigen der vorstehenden Ansprüche, **dadurch gekennzeichnet, dass** sie überdies einen Zusatzast (17) umfasst, der mit mindestens einem Schalter (18) versehen ist, der zwischen einer ersten Arbeitsstellung, in der er eine Verbindung zwischen der Speiseeinheit (6) und der Last (4) schließt, und einer zweiten Arbeitsstellung ansteuerbar ist, in der er nicht diese Verbindung schließt.

**11.** Schaltung nach Anspruch 10, **dadurch gekennzeichnet, dass** der Zusatzast (17) überdies Stromregelmittel (19) umfasst, die bereitgestellt sind, den Strom allmählich zu regeln und Stromspitzen im Zusatzast (17) zu beseitigen.

**12.** Schaltung nach Anspruch 10 oder 11, **dadurch gekennzeichnet, dass** der Zusatzast (17) überdies Schutzmittel (20) umfasst, die dem Schalter (18) zugeordnet sind, um diesen letzteren vor Extraspannungen und/oder Extraströmen, insbesondere im Bereich der Umschaltungen zwischen der ersten und der zweiten Arbeitsstellung zu schützen.

**Revendications**

**1.** Circuit pour la régulation sinusoïdale de l'énergie électrique fournie à une charge, comprenant:

- une interface d'entrée (5) pour recevoir une alimentation en énergie électrique d'une unité d'alimentation électrique (6);
- une interface de sortie (11) pour fournir une énergie électrique prédéterminée à une charge (4);
- une pluralité de branches principales (13) reliées les unes aux autres en parallèle, chaque branche principale (13) étant munie de:

• un élément capacitif respectif (2);
• un élément de régulation respectif (8) pour la régulation de l'énergie électrique dans ledit élément capacitif (2) respectif;
• un commutateur respectif (3), associé audit élément capacitif (2) et en mesure d'être commandé entre une première condition de fonctionnement à laquelle il ferme une connexion entre ladite charge (4), ledit élément capacitif respectif (2) et ladite unité d'alimentation électrique (6) et une deuxième condition de fonctionnement à laquelle il ne ferme pas cette connexion, chaque élément capacitif (2) définissant un parcours conducteur entre l'unité d'alimentation électrique (6) et la charge (4) quand le commutateur respectif (3) est à la première condition de fonctionnement;

**caractérisé en ce qu'**il comprend:
- un bloc de contrôle (12) pour commander lesdits commutateurs (3) entre leurs première et deuxième conditions de fonctionnement pour insérer des éléments capacitifs différents (2), reliés les uns aux autres en parallèle, entre l'unité d'alimentation électrique (6) et la charge (4), et régler l'alimentation en énergie électrique fournie à ladite charge (4), définissant la réactance capacitive interposée entre ladite unité d'alimentation électrique (6) et ladite charge (4);
- une branche auxiliaire (14) pour contrôler la résonance à ladite charge (4).

**2.** Circuit selon la revendication 1, **caractérisé en ce que** chacune desdites branches principales (13) a une première extrémité (13a) connectée à ladite unité d'alimentation électrique (5) et une deuxième extrémité (13b) connectée à ladite charge (4).

**3.** Circuit selon la revendication 1 ou 2, **caractérisé en ce qu'**une ou plus d'une desdites branches principales (13) comprend en outre des moyens de régulation de l'énergie électrique (8) associés à l'élément capacitif (2) de ladite branche principale (13), lesdits moyens de régulation de l'énergie électrique (8) étant aptes à contrôler l'énergie électrique dans ladite branche principale (13).

**4.** Circuit selon l'une quelconque des revendications 1 à 3, **caractérisé en ce qu'**une ou plus d'une desdites branches (13) comprend en outre des deuxièmes moyens de protection (9) associés au commutateur (3) de ladite branche principale (13) pour protéger ledit commutateur contre les tensions extra et/ou les courants extra, en particulier lors de commutations entre la première et la deuxième conditions de fonctionnement.

**5.** Circuit selon l'une quelconque des revendications 1 à 4, **caractérisé en ce qu'**une ou plus d'une desdites branches principales (13) est en outre munie d'un dispositif de décharge (10) associé à l'élément capacitif (2) de ladite branche principale (13), pour décharger l'énergie accumulée dans ledit élément capacitif (2).

**6.** Circuit selon l'une quelconque des revendications précédentes, **caractérisé en ce qu'**il comprend en outre une branche auxiliaire (14) connectée en parallèle à ladite charge (4) et munie de:

- un élément capacitif (7);
- un élément de régulation de l'énergie électrique (16);
- un dispositif de décharge (15) connecté en parallèle audit dispositif capacitif (7) pour décharger l'énergie accumulée dans ledit élément capacitif (7).

**7.** Circuit selon l'une quelconque des revendications précédentes, **caractérisé en ce que** le commutateur (3) d'une ou de plus d'une desdites branches principales (13) peut être commandé entre une condition de fermeture, correspondant à ladite première condition de fonctionnement, et une condition d'ouverture, correspondant à ladite deuxième condition de fonctionnement.

8. Circuit selon la revendication 7, **caractérisé en ce que** l'élément capacitif (2) d'une ou de plus d'une desdites branches principales (13) est connecté en parallèle au dispositif de décharge respectif (10).

9. Circuit selon l'une quelconque des revendications précédentes, **caractérisé en ce que** le dispositif de décharge (10) d'une ou de plus d'une desdites branches principales (13) a une première extrémité (10a), connectée à une extrémité (2a) de l'élément capacitif respectif (2), et une deuxième extrémité (10b), le commutateur (3) desdites une ou plusieurs branches principales (13), quand il est dans la deuxième condition de fonctionnement, fermant une connexion entre la deuxième extrémité (10b) dudit dispositif de décharge (10) et une deuxième extrémité (2b) dudit élément capacitif respectif (2).

10. Circuit selon l'une quelconque des revendications précédentes, **caractérisé en ce qu'**il comprend en outre une branche supplémentaires (17) munie au moins d'un commutateur (16), en mesure d'être commandée entre une première condition de fonctionnement à laquelle elle ferme une connexion entre ladite unité d'alimentation électrique (6) et ladite charge (4), et une deuxième condition de fonctionnement à laquelle elle ne ferme pas ladite connexion.

11. Circuit selon la revendication 10, **caractérisé en ce que** ladite branche supplémentaire (17) comprend en outre des moyens de régulation de l'énergie électrique (19) aptes è régler graduellement l'énergie électrique et à éliminer les intensités de crête dans ladite branche supplémentaires (17).

12. Circuit selon la revendication 10 ou 11, **caractérisé en ce que** ladite branche supplémentaire (17) comprend en outre des moyens de protection (20) associés audit commutateur (18) pour protéger le commutateur contre la tension extra et/ou les courants extra, en particulier lors de commutations entre la première et la deuxième conditions de fonctionnement.

Fig.1

Fig.2

Fig.3

| CAPACITORS USED | TOTAL CAPACITY | BINARY COMBINATION |
|---|---|---|
| C1=3μF | 3μF | 1000 |
| C2=6μF | 6μF | 0100 |
| C1+C2=3μF+6μF | 9μF | 1100 |
| C3=12μF | 12μF | 0010 |
| C1+C3=3μF+12μF | 15μF | 1010 |
| C2+C3=6μF+12μF | 18μF | 0110 |
| C1+C2+C3=3μF+6μF+12 F | 21μF | 1110 |
| DIRECT CONNECTION | | 0001 |

Fig.4

**EP 1 792 389 B1**

**REFERENCES CITED IN THE DESCRIPTION**

**Patent documents cited in the description**

- GB 1202863 A